Europäisches Patentamt

European Patent Office

Office européen des brevets

(11) Numéro de publication: **0 401 094**
**A1**

## (12) DEMANDE DE BREVET EUROPEEN

(21) Numéro de dépôt: 90401388.5

(22) Date de dépôt: 23.05.90

(51) Int. Cl.⁵: **E06B 3/06**

(30) Priorité: 01.06.89 FR 8907240

(43) Date de publication de la demande:
05.12.90 Bulletin 90/49

(84) Etats contractants désignés:
AT BE CH DE DK ES GB GR IT LI LU NL SE

(71) Demandeur: FERCO INTERNATIONAL Usine
de Ferrures de Bâtiment Société à
responsabilité limitée
2, rue du Vieux-Moulin Reding
F-57400 Sarrebourg(FR)

(72) Inventeur: Kautt, Jean-Jacques
24, rue Pertois
F-67100 Strasbourg(FR)

(74) Mandataire: Rodhain, Claude et al
Cabinet Claude Rodhain 30, rue la Boétie
F-75008 Paris(FR)

(54) **Installation pour la finition de châssis de fenêtres.**

(57) L'invention concerne une installation pour la finition de châssis, à partir d'un cadre nu d'ouvrant et d'un cadre nu de dormant, chaque cadre comportant des rainures, saignées, épaulements prêts à recevoir les ferrures, joint d'étanchéité extérieur, entretoise de fond de vitrage, vitrage, joint de parclose et parcloses.

Elle est formée de deux chaînes continues de postes modulaires agencés selon deux plans de référence (PP) et (P′P′) parallèles, le premier (PP) comprenant les moyens de finition des dormants et le second (P′P′) comprenant les moyens de finition des ouvrants.

La chaîne de finition des ouvrants (P′P′) est raccordée en aval à son extrémité à la chaîne de finition des dormants (PP) par l'intermédiaire d'un poste de stockage de transfert (70) situé en face d'un poste d'assemblage des ouvrants sur les dormants (110), lui-même placé dans le plan de référence (PP), ainsi que le poste de pose et de calage du vitrage (120) et le poste de pose des parcloses (130).

FIG.2B

EP 0 401 094 A1

FIG.2C

L'invention concerne une installation pour la finition de châssis de fenêtres, c'est-à-dire pour l'équipement de cadres nus d'ouvrants et de dormants et leur assemblage.

La demande de brevet français N° 88 16320 déposée le 12 décembre 1988 par la demanderesse décrit une installation de finition de vantaux de fenêtres, permettant la réalisation de vantaux équipés de leurs ferrures, joints, vitrages, et parcloses et prêts à être montés sur le dormant d'une fenêtre ou d'une porte fenêtre.

Pour des châssis de section relativement importante en bois ou en matière plastique, en particulier en PVC, comme c'est le cas en particulier en R.F.A, il est coutume de travailler le dormant et l'ouvrant simultanément en parallèle, ainsi que de les équiper de leurs ferrures et de leurs joints, et de les assembler avant la pose du vitrage et les opérations qui en découlent, en particulier la pose de la parclose.

Du fait des sections de montant beaucoup plus importantes que celles des montants de châssis de fenêtres couramment utilisées en France, par exemple, l'agencement du joint d'étanchéité et du vitrage sont également relativement différents.

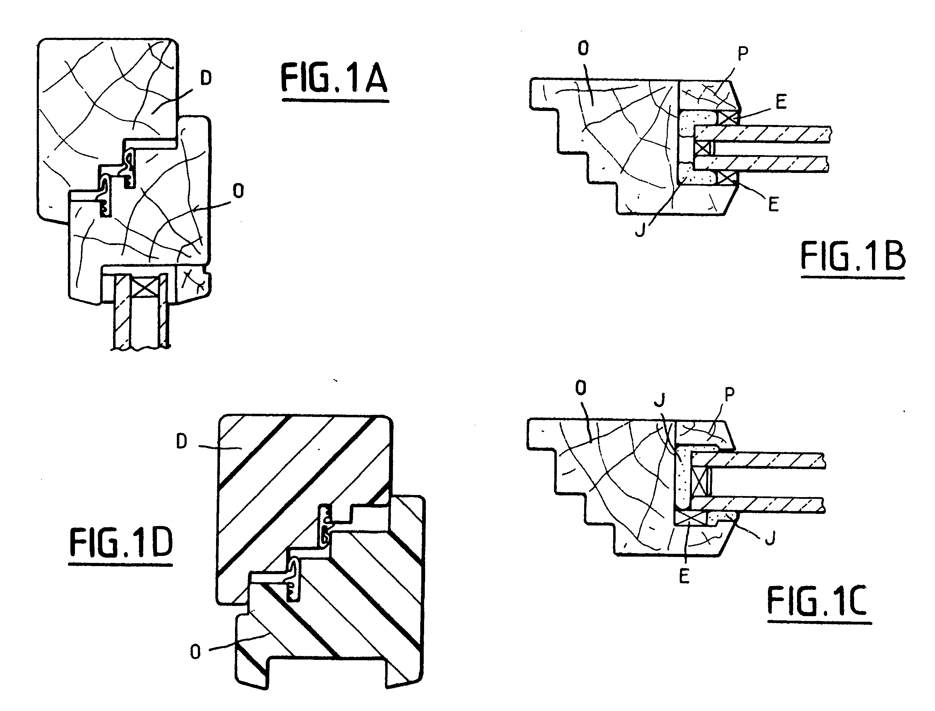

Ces agencements différents sont schématisés sur les figures 1A à 1D, qui sont des sections d'un des montants de dormant et/ou de vantail équipés, plus précisément :

- la figure 1A est une représentation schématique d'un châssis, de préférence en bois, dont le vantail est équipé de deux joints extérieurs,

- les figures 1B et 1C sont des représentations schématiques d'un vantail, de préférence en bois, équipé de sa (ou ses) entretoise(s), de ses joints de vitrage, de son vitrage et de sa parclose,

- la figure 1D est une représentation schématique d'un châssis, de préférence en PVC, équipé d'un joint extérieur sur vantail et d'un joint extérieur sur dormant.

La figure 1A représente un agencement, en particulier destiné aux châssis en bois, à double joints extérieurs sur l'ouvrant. Il est courant de ne disposer qu'un seul joint extérieur sur l'ouvrant. L'installation de deux joints extérieurs sur l'ouvrant permet la formation d'une chambre de décompression plus importante et donc une meilleure étanchéité.

La figure 1D représente un autre agencement , en particulier destiné aux châssis en PVC, et permettant également la création d'une chambre de décompression importante. Dans ce cas, les joints sont également au nombre de deux, mais l'un extérieur, est mis en place sur l'ouvrant O et l'autre, intérieur, sur le dormant D.

Par ailleurs, il est à noter une autre différence d'agencement selon les savoir-faire français et allemands. Dans les cas d'un simple joint extérieur central sur ouvrant ou sur dormant en R.F.A, le joint est placé du côté extérieur de la ferrure, alors qu'en France, le joint est posé entre la ferrure et le recouvrement.

En outre, pour des sections d'ouvrants relativement petites, telles que celles utilisées couramment en France, par exemple, la pose du vitrage se fait grâce à la mise en place d'un joint souple de fond de vitrage, d'un joint souple de parclose et d'une parclose. Ces joints d'étanchéité sont suffisants pour absorber le jeu éventuel de vrillage.

Par contre, pour des sections d'ouvrants plus importantes, telles qu'utilisées couramment en R.F.A, par exemple, le jeu de déformation est beaucoup plus important et il est nécessaire d'associer au joint souple, une ou plusieurs entretoises (ou cales) non compressibles. Deux exemples d'agencements qui en découlent sont représentés schématiquement sur les figures 1B et 1C.

Selon la figure 1B, les deux entretoises non compressibles sont mises en place aux bords de la feuillure de l'ouvrant O et de la parclose P. L'espace restant entre le vitrage et la feuillure et la parclose P est rempli de joint de façon classique.

Selon la figure 1C, une seule entretoise est mise en place au fond de la feuillure de l'ouvrant O et le reste de l'espace entre vitrage, feuillure et parclose P est rempli de joint.

Les diverses opérations de finition d'ouvrants et de vantaux sont jusqu'alors effectuées manuellement à des poste séparés, ce qui entraîne des coûts de production élevés du fait des temps de fabrication inhérents au caractère manuel de l'exécution des opérations. En outre, la finition reste bien évidemment liée à la dextérité et à la conscience professionnelle de l'opérateur, ce qui peut par conséquent entraîner des variations préjudiciables dans la qualité du travail. De plus, toute modification intervenant sur ce type de fabrication traditionnelle en ligne :
- augmente le nombre de postes de travail lorsqu'un accessoire où les modifications viennent affecter un type d'ouvrant ou de dormant,
- présente des temps morts ou temps d'arrêt principalement lors de changement de type de produit, par la nécessité de mise en concordance des approvisionnements, des gabarits de travail etc...,
- au pire des cas, nécessite la modification des implantations des postes de travail lorsqu'il y a implantation de modèles différents où des tâches plus nombreuses seraient à exécuter.

L'invention a pour but de remédier à ces inconvénients et a pour objet une installation pour la finition de châssis la plus automatisée possible de manière à réduire, autant que faire se peut, des opérations et manipulations manuelles grèvant les coûts de production.

Ce but est atteint avec une installation comprenant :
- des moyens automatiques de finition des dormants,
- des moyens automatiques de finition des ouvrants,
- un poste d'assemblage des ouvrants sur les dormants, un poste de pose et de calage de vitrage, et un poste de pose des parcloses.

De préférence cette installation est formée de deux chaînes continues de postes modulaires agencés selon deux plans de référence parallèles, dont l'un comprend les moyens de finition des dormants et le second les moyens de finition des ouvrants.

Pour parfaire l'automaticité de l'installation, chaque poste de travail comporte un convoyeur situé dans l'alignement du convoyeur du poste adjacent, des organes de transbordement assurant le passage des cadres d'un poste à un autre sans transition.

L'installation selon l'invention permet ainsi, grâce à l'exécution automatisée des différentes opérations, de diminuer sensiblement les opérateurs et de réaliser de façon continue, l'équipement des vantaux et des dormants, depuis les cadres nus jusqu'au châssis complet de fenêtre. En outre, les opérations de manipulation manuelles sont supprimées, ce qui évite les temps morts tout en permettant d'obtenir une parfaite régularité dans la qualité de la finition.

D'autres caractéristiques et avantages ressortiront de la description ci-après et des dessins annexés dans lesquels :

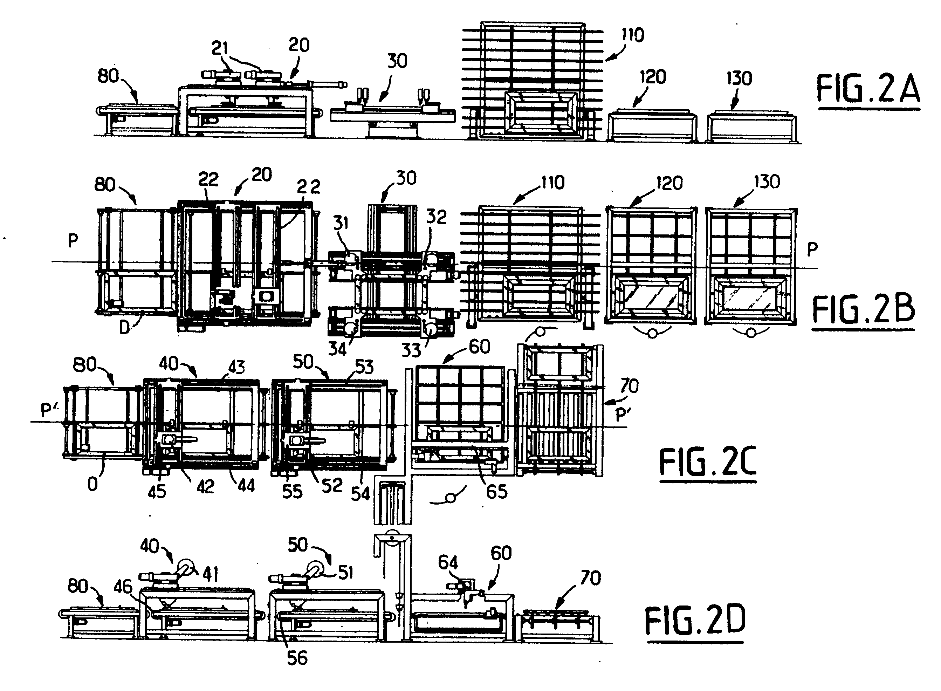

- les figures 2A et 2B sont respectivement une vue en élévation et une vue de dessus, de la chaîne de finition de dormants, de préférence en bois, conforme à l'invention,

- les figures 2C et 2D sont respectivement une vue de dessus et une vue en élévation, de la chaîne de finition des ouvrants, de préférence en bois, conforme à l'invention,
les figures 2B et 2C prises dans leur ensemble représentant globalement, en vue de dessus, l'installation de finition de châssis, de préférence en bois, conforme à l'invention.

- les figures 3A et 3B sont respectivement une vue en élévation et une vue de dessus de la chaîne de finition de dormants, de préférence en PVC, conforme à l'invention,

- les figures 3C et 3D sont respectivement une vue de dessus et une vue en élévation de la chaîne de finition d'ouvrants, de préférence en PVC, conforme à l'invention,

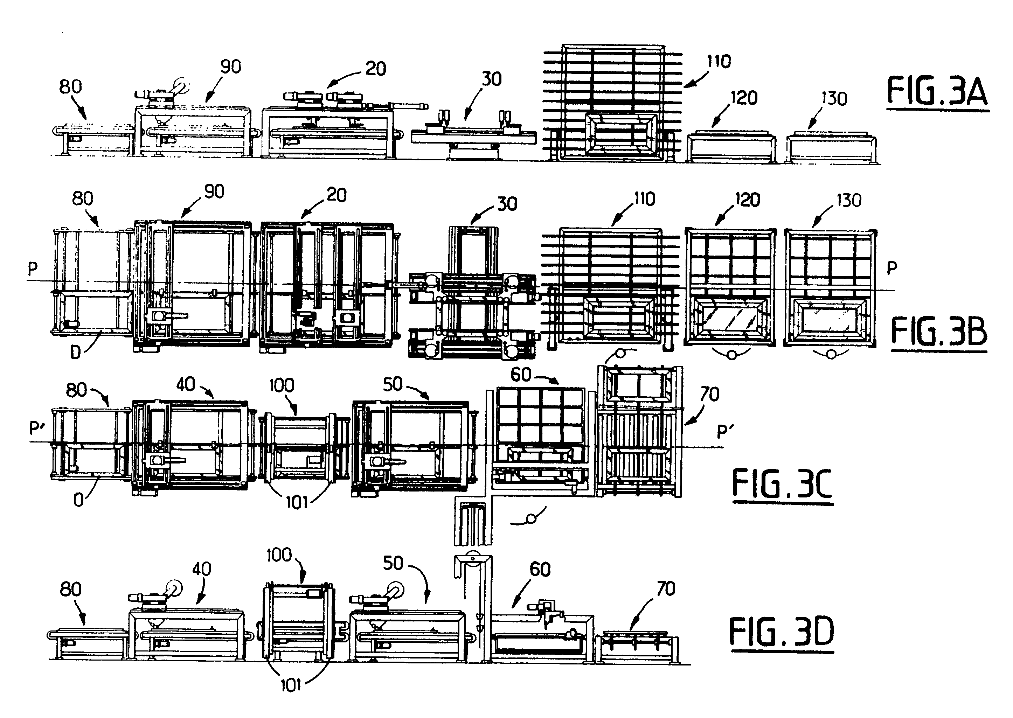

les figures 3B et 3C prises dans leur ensemble représentant globalement, en vue de dessus, l'installation de finition de châssis, de préférence en PVC, conforme à l'invention.

Comme l'on peut le voir sur les figures, l'installation conforme à l'invention comprend des moyens automatiques de finition des dormants, des moyens automatiques de finition des ouvrants, un poste d'assemblage des ouvrants sur les dormants 110, un poste de pose et de calage du vitrage 120 et un poste de pose des parcloses 130.

Les figures 2A à 2D représentent un premier mode préféré de réalisation de l'installation de finition de châssis, destiné en particulier aux châssis en bois. Selon ce premier mode de réalisation, les moyens automatiques de finition des dormants comprennent des moyens 20 pour la pose des gâches et des moyens 30 pour la pose des paliers et des supports d'angles. Les moyens automatiques de finition des ouvrants comprennent des moyens 40 de pose de joints extérieurs, des moyens 50 de pose du joint de fond de vitrage et des moyens 60 de pose et de fixation des ferrures.

Tous ces moyens sont agencés selon deux chaînes continues de postes modulaires selon deux plans de référence PP et P'P' parallèles, le plan PP comprenant les moyens de finition des dormants, et le plan P'P' comprenant des moyens de finition des ouvrants (figures 2B et 2C prises globalement).

Tous ces postes comprennent des moyens de reconnaissance (taquets de gabarit, détecteurs de proximité, cellules,...) du dimensionnement, de la matière et du type de vantail à équiper.

Chaque chaîne de finition comprend en amont des moyens de chargement et de prise de côtes 80, permettant la reconnaissance du cadre de vantail ou de dormant apprêté (dimension, matière, type, mode d'ouverture).

La chaîne de finition des ouvrants P'P' est raccordée en aval à son extrémité à la chaîne de finition des dormants PP par l'intermédiaire d'un poste de stockage et de transfert 70, situé en face du poste d'assemblage des ouvrants sur les dormants 110, lui-même placé dans le plan de référence PP, ainsi que le poste de pose et de calage du vitrage 120 et le poste de pose des parcloses 130.

Ce premier mode de réalisation de l'installation, en particulier destiné à la finition de châssis en bois est particulièrement remarquable en ce que le poste de pose de joint extérieur 40 sur les ouvrants peut être commandé pour effectuer deux passes consécutives sur le même ouvrant. Ainsi peuvent être équipés des ouvrants tels que celui représenté sur la figure 1A.

Par ailleurs, le poste de pose de joint de fond de vitrage 50 sur les ouvrant réalise également la pose d'au moins une entretoise E de montage de vitrage. Ainsi l'agencement de montage de vitrage tel que représenté sur la figure 1B ou la figure 1C par exemple peut être réalisé automatiquement.

Les postes de pose de joints extérieurs et de joints et d'entretoises de vitrage sont réalisés de façon analogue. Ils sont constitués d'un bâti, d'une table élévatrice, d'une bobine de dévidage de joint ou entretoise 41, 51 et d'un chariot 42, 52 mobile en translation sur deux glissières 43, 53 et 44, 54 et se déplaçant dans le plan longitudinal de l'ouvrant O, ce chariot débitant à longueur le joint ou entretoise et l'appliquant en force par des moyens de guidage mécaniques, pneumatiques ou hydrauliques, sur l'ouvrant. Ce chariot 42, 52 est monté rotatif sur son porte chariot 45, 55 pour pouvoir suivre toute la périphérie du cadre.

Le transfert de l'ouvrant d'un poste à un autre est réalisé par convoyeur, chaque poste comportant une chaîne ou un tapis d'entraînement 46, 56, des moyens de transbordement non représentés mais connus en soi assurant le passage des ouvrants d'un poste à un autre sans transition. Ces moyens de transbordement peuvent être avantageusement constitués d'un ou plusieurs rouleaux fous placés dans l'interstice existant entre deux postes consécutifs.

Les postes de pose de ferrures 60 comportent un châssis supportant une table élévatrice amenée de façon usuelle à niveau par des vérins verticaux, par exemple. Des organes d'introduction et de fixation des ferrures sont constitués d'organes de poussée et de vissage 64, montés sur une glissière 65.

Le poste de pose des gâches 20 sur le dormant comporte également un châssis et une table élévatrice. Il comporte au moins une tête de pose 21 alimentée en gâches et montée sur une glissière 22.

Le poste de pose des paliers et supports d'angles 30 sur dormants comporte de préférence quatre têtes de travail 31, 32, 33, 34 montées sur des glissières afin de pouvoir être positionnées aux quatre coins d'un ouvrant O.

Les postes d'assemblage ouvrant sur dormant 110, de pose et de calage du vitrage 120, le poste de pose de parclose 130 et le poste de stockage et de transfert des ouvrants 70 sont des postes de traitement et de transfert connus en soi.

Un second mode préféré de réalisation de l'installation de finition de châssis destiné en particulier aux châssis en matière plastique, par exemple en PVC, est représenté sur les figures 3A à 3D.

Tout comme la précédente installation, celle-ci comporte des postes de chargement et de prise de côtes 80, un poste de pose de gâches 20 sur dormant, un poste de pose de paliers de supports d'angles 30 sur dormant, un poste de pose de joint extérieur 40 sur ouvrant, un poste de pose de joint de vitrage 50 sur ouvrant , un poste de pose de ferrures 60 sur ouvrant, un poste de stockage et de transfert des ouvrants 70, un poste d'assemblage ouvrant sur dormant 110, un poste de pose et de calage du vitrage 120 et un poste de pose des parcloses 130. Ces différents postes sont constitués de façon analogue à ceux déjà décrits.

Elle se différencie de l'installation précédente en ce qu'est prévu en début de chaîne de finition des dormants PP, un poste de pose de joint extérieur 90 sur dormant. Ce poste est de constitution analogue aux postes 40, 50 et est destiné à la mise en place du joint extérieur sur dormant D afin de pouvoir équiper ce dernier d'un joint d'étanchéité tel que celui représenté sur la figure 1D.

Elle comporte de plus dans la chaîne de finition des ouvrants P'P', entre le poste de pose de joint extérieur 40 et le poste de pose de joint de vitrage 50, un poste de retournement 100.

Ce poste de retournement 100 est constitué de façon connue en soi, de deux rails circulaires 101, sur lesquels sont tournés deux tapis pourvus de moyens de roulement et supportant un ouvrant retenu grâce à des moyens de blocage connus en soi.

Ici placé dans une installation destinée en particulier aux châssis en matière plastique, ce poste de retournement 100 peut indifféremment être inséré dans la chaîne de finition pour châssis en bois ou châssis en matière plastique. En effet, sa nécessité dépend de la forme de la section de l'ouvrant. Si la feuillure où est mis en place au moins un joint extérieur, est du même côté de l'ouvrant que la parclose, aucun retournement n'est nécessaire. Par contre, si la feuillure et la parclose sont sur les faces opposées (cas des figures 1A à 1C), il faut retourner le cadre d'ouvrant entre le poste de pose de joint extérieur 40 et le poste de pose de joint de vitrage 50.

L'installation peut également comporter un poste supplémentaire de pose de joint de parclose et/ou des moyens de pose de jet d'eau entre la section de vantail et la parclose.

## Revendications

1) Installation pour la finition de châssis, à partir d'un cadre nu d'ouvrant et d'un cadre nu de dormant, chaque cadre comportant des rainures, saignées et épaulements prêts à recevoir les ferrures, joint(s) d'étanchéité, joint de fond de vitrage, vitrage, joint de parclose et parcloses, installation caractérisée en ce qu'elle comprend :
- des moyens automatiques de finition des dormants,
- des moyens automatiques de finition des ouvrants,
- un poste d'assemblage des ouvrants sur les dormants (110).

2) Installation selon la revendication 1, caractérisée en ce que les moyens automatiques de finition des dormants comprennent :
- des moyens (20) pour la pose des gâches,
- des moyens (30) pour la pose des paliers et des supports d'angles.

3) Installation selon l'une quelconque des revendications précédentes, caractérisée en ce que les moyens automatiques de finition des ouvrants comprennent :
- des moyens (40) de pose de joint(s) extérieur(s),
- des moyens (50) de pose du joint de fond de vitrage,
- des moyens (60) de pose et de fixation des ferrures.

4) Installation selon l'une quelconque des revendications précédentes, caractérisée en ce qu'elle comprend des moyens de reconnaissance (taquets de gabarit, détecteurs de proximité, cellules) du dimensionnement, de la matière et du type de vantail à équiper.

5) Installation selon l'une quelconque des revendications précédentes, caractérisée en ce qu'elle comprend, en extrémité amont des moyens de chargement et de prise de côtes (80) d'une part des ouvrants et d'autre part des dormants.

6) Installation selon l'une quelconque des revendications précédentes, caractérisée en ce qu'elle est formée de deux chaînes continues de postes modulaires agencés selon deux plans de référence (PP) et (P'P') parallèles, le premier (PP) comprenant les moyens de finition des dormants et le second (P'P') comprenant les moyens de finition des ouvrants.

7) Installation selon la revendication 6, caractérisée en ce que la chaîne de finition des ouvrants (P'P') est raccordée en aval à son extrémité à la chaîne de finition des dormants (PP) par l'intermédiaire d'un poste de stockage et de transfert (70) situé en face du poste d'assemblage des ouvrants sur les dormants (110) lui même placé dans le plan de référence (PP), ainsi que le poste de pose et de calage du vitrage (120) et le poste de pose des parcloses (130).

8) Installation selon l'une quelconque des revendications précédentes, en particulier destinée à la finition de châssis en bois, caractérisée en ce que le poste de pose de joint extérieur (40) sur les ouvrants est commandé pour pouvoir effectuer deux passes consécutives sur le même ouvrant.

9) Installation selon la revendication 8, caractérisée en ce que le poste de pose de joint de fond de vitrage (50) sur les ouvrants réalise également la pose d'au moins une entretoise (E) de montage du vitrage.

10) Installation selon l'une quelconque des revendications 1 à 7, en particulier destinée à la finition de châssis en matière plastique caractérisée en ce qu'est prévu en début de chaîne de finition des dormants (PP), un poste de pose de joint extérieur (90) sur dormant.

11) Installation selon la revendication 3 ou 10, caractérisée en ce qu'il est prévu dans la chaîne de finition des ouvrants (P'P') entre le poste de pose de joint extérieur (40) et le poste de pose de joint de vitrage (50) un poste de retournement (100).

12) Installation selon l'une quelconque des revendications précédentes, caractérisée en ce que tous les postes de travail comportent une table élévatrice de mise à niveau par vérin.

13) Installation selon l'une quelconque des revendications précédentes, caractérisée en ce que chaque poste automatique de travail comporte un convoyeur situé dans l'alignement du poste contigu et des organes de transbordement tels que des rouleaux assurant le passage des vantaux d'un poste à un autre sans transition.

14) Installation selon l'une quelconque des revendications précédentes, caractérisée en ce qu'elle comporte un poste supplémentaire de pose de joint de parclose.

15) Installation selon l'une quelconque des revendications précédentes, caractérisée en ce qu'elle comporte des moyens de pose de jet d'eau entre la section du vantail et la parclose.

16) Installation selon l'une quelconque des revendications précédentes, caractérisée en ce qu'elle comprend un poste de pose et de calage du vitrage (120) et un poste de pose des parcloses (130).

FIG.1A

FIG.1B

FIG.1C

FIG.1D

FIG.2A

FIG.2B

FIG.2C

FIG.2D

FIG.3A

FIG.3B

FIG.3C

FIG.3D

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | DE-A-3 042 284 (KG HASSOMAT MASCHINENBAU GMBH & CO.) * le document en entier * --- | 1 | E 06 B 3/06 |
| A | DE-A-2 203 771 (W. FRANK GMBH) * le document en entier * --- | 1-3 | |
| A | FR-A-2 212 479 (W. FRANK GMBH) * le document en entier * --- | 1 | |
| A | GB-A-2 022 664 (RIVERS MACHINERY LTD.) * le document en entier * --- | 1 | |
| A | FR-A-2 534 621 (ETABLISSEMENTS BROUSSOT) * le document en entier * --- | 1 | |
| A | CH-A- 432 860 (JAEGER-FRANK KG) * le document en entier * ----- | 1 | |

**DOMAINES TECHNIQUES RECHERCHES (Int. Cl.5)**

E 06 B
E 04 F

Le présent rapport a été établi pour toutes les revendications

| Lieu de la recherche | Date d'achèvement de la recherche | Examinateur |
|---|---|---|
| BERLIN | 26-06-1990 | KRABEL A.W.G. |